# FASCICULE DE BREVET EUROPEEN

(11) **EP 0 781 375 B1**
(45) Date de publication et mention de la délivrance du brevet: **02.02.2000**
(21) Numéro de dépôt: 95932016.9
(22) Date de dépôt: 08.09.1995
(51) Int. Cl.: F02D 43/00, F02D 41/02

(54) **PROCEDE DE COMMANDE D'UN MOTEUR A COMBUSTION INTERNE A INJECTION DIRECTE**
VERFAHREN ZUR STEUERUNG EINER BRENNKRAFTMASCHINE MIT DIREKTEINSPRITZUNG
METHOD FOR CONTROLLING A DIRECT INJECTION INTERNAL COMBUSTION ENGINE

(30) Priorité: 12.09.1994 FR 9410947
(43) Date de publication de la demande: 02.07.1997
(73) Titulaire: SIEMENS AUTOMOTIVE S.A., 31036 Toulouse Cédex (FR)
(72) Inventeur: AUBOURG, Alain-Michel-Jean, F-31240 Saint-Jean (FR); COSAULT, Jean, F-31600 Muret (FR)
(74) Mandataire: Epping, Wilhelm, Dr.-Ing.
(86) Numéro de dépôt international: EP9503544
(87) Numéro de publication internationale: WO9608645

(56) Documents cités:
- EP-A- 0 450 787
- EP-A- 0 547 649
- FR-A- 2 657 398
- US-A- 4 760 825

## Description

La présente invention est relative à un procédé de commande d'un moteur à combustion inteme, plus particulièrement adapté à un moteur à injection directe, à deux ou quatre temps.

On connaît de la technique antérieure, par exemple de la demande de brevet FR 2 657 398, un procédé de commande d'un moteur à injection directe et allumage commandé, dans lequel on détecte le degré d'enfoncement d'une pédale d'accélérateur et le régime du moteur pour en tirer des paramètres de réglage optimal du moteur, dont entre autres la durée et la phase d'injection de carburant ainsi que l'angle d'ouverture d'un papillon d'admission motorisé. Ce type de commande offre beaucoup d'avantages, mais présente une grande sensibilité au choix des paramètres de réglage ainsi qu'à leur dérive éventuelle liée à l'évolution dans le temps des caractéristiques des composants du système. Par exemple, l'ensemble d'admission d'air (filtre, papillon, conduits...) présente une perméabilité qui peut varier dans le temps ou d'un moteur à l'autre. Ceci peut avoir pour conséquence une variation du remplissage en air, donc de la richesse de combustion et entraîner une augmentation de la pollution. Pour y remédier, la demanderesse a proposé dans la demande de brevet enregistrée sous le n° 9408700 un procédé et un dispositif propre à réguler cette richesse de combustion, mettant en oeuvre une sonde de mesure de la richesse des gaz d'échappement. Cependant, outre le surcoût lié à cette sonde, certains inconvénients dus aux phénomènes transitoires peuvent subsister. En effet, lors d'une action rapide sur la pédale d'accélérateur, le calculateur transmet instantanément les commandes correspondantes aux actionneurs. Toutefois, ceux-ci, ainsi que les phénomènes qu'ils contrôlent, n'ont pas tous le même temps de réponse. Par exemple, les injecteurs et la quantité de carburant qu'ils délivrent sont en avance sur l'ouverture du papillon d'admission. Ce décalage est encore accentué par le retard du remplissage en air dû à la capacité du collecteur d'admission. De ce fait, des écarts entre la richesse obtenue et la richesse optimale peuvent se produire et générer des émissions de polluants.

La présente invention a donc pour but de pallier ces inconvénients des systèmes de la technique antérieure en tenant compte de l'évolution du remplissage en air du moteur sans renoncer aux avantages que présentent ces systèmes pour la commande des moteurs à injection directe.

On atteint ces buts de l'invention, ainsi que d'autres qui apparaîtront dans la suite de la présente description, au moyen d'un procédé de commande d'un moteur à combustion inteme à injection directe, du type utilisant une mesure du degré d'enfoncement d'une pédale d'accélérateur et une mesure du régime de rotation du moteur pour foumir des paramètres de réglage optimal dudit moteur, selon lequel on établit, lors de la mise au point du moteur, une table représentant pour chaque couple (degré d'enfoncement, régime), le rapport pression / température de l'air régnant dans le collecteur d'admission en fonctionnement stabilisé; on mesure, en fonctionnement normal, la pression et la température de l'air admis; on forme le rapport pression/température mesurés; et on utilise la table et une au moins des mesures effectuées pour en déduire au moins un des paramètres de réglage optimal du moteur.

Suivant un premier mode d'exécution du procédé, on détermine dans la table, à partir du régime et du degré d'enfoncement mesurés une valeur de consigne du rapport pression/température de l'air admis, et on agit sur l'angle d'ouverture d'un papillon des gaz placé dans le collecteur d'admission pour asservir le rapport pression / température mesuré à cette valeur de consigne.

Suivant un second mode d'exécution du procédé, on détermine par lecture inverse de la table, à partir du régime et du rapport pression/température mesurés un degré d'enfoncement virtuel de la pédale d'accélérateur, et on utilise ce degré d'enfoncement virtuel de la pédale pour foumir au moins un des paramètres de réglage optimal du moteur.

Selon une caractéristique importante de ce mode d'exécution, la lecture du degré d'enfoncement virtuel de la pédale dans la table s'effectue en déterminant pour les régimes tabulés immédiatement adjacents au régime réel, la valeur du degré d'enfoncement de la pédale correspondant au rapport pression / température mesuré, et en interpolant entre ces valeurs en fonction du régime réel. De plus, lorsque plusieurs degrés d'enfoncement virtuel correspondent au rapport pression / température mesuré, seul le degré d'enfoncement virtuel le plus proche du degré d'enfoncement réel de la pédale est pris en considération. De même, lorsque pour un régime tabulé immédiatement adjacent au régime réel, la variation du rapport pression / température enregistré dans la table sur un intervalle entre deux valeurs du degré d'enfoncement de la pédale encadrant la valeur du rapport mesuré est inférieure à un seuil prédéterminé, le degré d'enfoncement virtuel est déterminé en choisissant le degré d'enfoncement réel si celui-ci est compris entre les deux valeurs du degré d'enfoncement limitant l'intervalle ou la valeur limite la plus proche dans le cas contraire.

D'autres caractéristiques et avantages de l'invention apparaîtront à la lecture de la description qui va suivre et à l'examen des dessins annexés dans lesquels:
- la figure 1 représente le schéma d'un moteur équipé d'un dispositif adapté à la mise en oeuvre du procédé de commande selon l'invention,
- la figure 2 représente un schéma de l'architecture fonctionnelle d'un calculateur faisant partie du dispositif de la figure 1, et
- la figure 3 représente un schéma utile à la compréhension d'une étape du procédé selon l'invention.

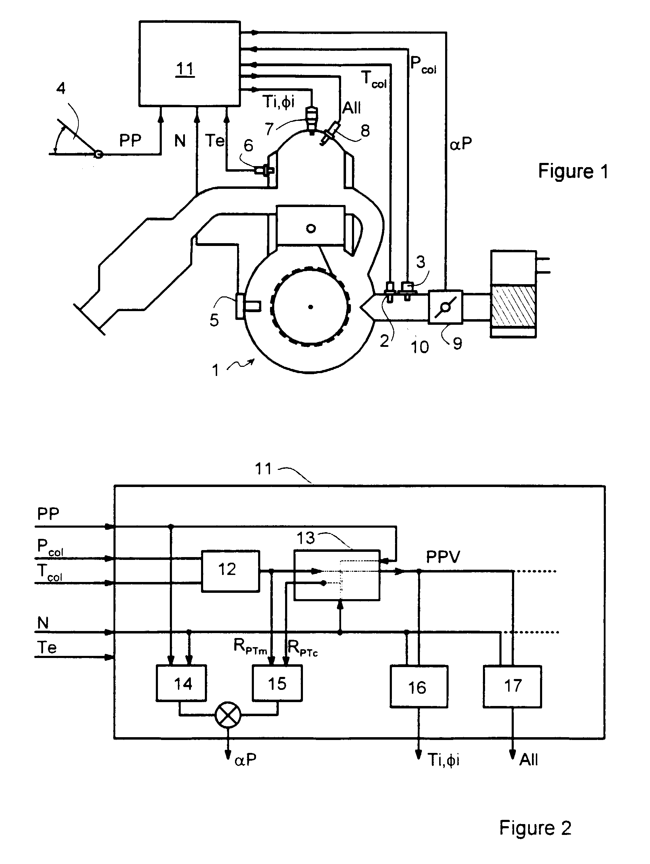

On se réfère maintenant à la figure 1 où on a représenté un moteur à combustion interne 1 à injection directe, équipé d'un calculateur 11 commandant le fonctionnement du moteur. Le collecteur d'admission 10 du moteur comporte un papillon d'admission motorisé 9 permettant de régler la quantité d'air admise dans le moteur. Un capteur de température d'air 2 et un capteur de pression 3, placés entre le moteur et le papillon motorisé 9 foumissent respectivement au calculateur 11 des signaux T_{col} et P_{col} représentatifs de la température et de la pression de l'air admis dans le collecteur 10 en aval du papillon. Le calculateur 11 reçoit également un signal PP représentatif de l'enfoncement d'une pédale d'accélérateur 4, un signal représentatif du régime N du moteur délivré par un capteur de régime 5, ainsi qu'un signal représentatif de la température Te du liquide de refroidissement, délivré par un capteur 6. Le calculateur 11 élabore des signaux de commande sur la base de ces signaux et en fonction de stratégies programmées. En particulier, le calculateur délivre à des moyens d'alimentation en carburant, par exemple un injecteur 7, un signal représentatif de la quantité de carburant à injecter dans le moteur, ce signal définissant par exemple la phase φi et la durée Ti d'injection du carburant. Le calculateur commande également le papillon d'admission motorisé 9 placé dans le conduit d'admission 10, au moyen d'un signal définissant un angle αP d'ouverture du papillon, ainsi que des moyens d'allumage 8 par un signal All.

Le fonctionnement du dispositif va maintenant être détaillé en liaison avec la figure 2 qui représente l'architecture fonctionnelle du calculateur 11. Classiquement, lors de la mise au point du moteur, on a élaboré des tables donnant les valeurs optimales des paramètres de commande du moteur tels que l'angle d'ouverture du papillon αP, la durée Ti et la phase φi d'injection du carburant, l'instant d'allumage, en fonction du degré d'enfoncement PP de la pédale d'accélérateur et du régime N. Ces valeurs optimales sont obtenues en fonctionnement stabilisé, c'est à dire pour des valeurs constantes de PP et de N, en ajustant les paramètres de commande pour obtenir par exemple le meilleur compromis couple moteur / pollution. Selon un enseignement de l'invention, on a également mesuré la température T_{col} et la pression P_{col} de l'air régnant dans le collecteur d'admission lorsque ces valeurs optimales sont appliquées au moteur et on a dressé une table des rapports pression/température R_{PT0} en fonction du degré d'enfoncement PP de la pédale d'accélérateur et du régime N. Le calculateur 11 comprend un bloc 12 recevant les signaux T_{col} et P_{col} représentatifs de la température et de la pression de l'air régnant dans le collecteur d'admission 10 et apte à former le rapport pression / température mesurés R_{PTm}. Le calculateur 11 comprend également un bloc 13 comportant une table des rapports pression / température établie comme décrit ci-dessus. Le calculateur 11 comporte en outre des blocs 14 et 15 servant à déterminer l'angle αP d'ouverture du papillon 9 dont le fonctionnement sera explicité en relation avec un premier mode d'exploitation du procédé selon l'invention, et des blocs 16 et 17 fournissant respectivement les paramètres optimaux d'injection de carburant et d'allumage, dont le fonctionnement sera explicité en relation avec un second mode d'exploitation du procédé selon l'invention. En fonctionnement normal, le calculateur 11 reçoit les signaux PP, N, T_{col} et P_{col} représentatifs respectivement du degré d'enfoncement de la pédale, du régime moteur, de la température et de la pression de l'air dans le collecteur d'admission.

Selon un premier mode d'exploitation de l'invention, le degré d'enfoncement de la pédale PP et le régime N sont transmis au bloc 14 qui élabore une valeur nominale d'ouverture du papillon 9 au moyen de la table dressée lors de la mise au point. Ces mêmes signaux PP et N sont transmis au bloc 13 qui, par lecture directe de la table des rapports R_{PT0} qu'il contient, foumit au bloc 15 une valeur de consigne R_{PTc} correspondant à la valeur du rapport pression/température de l'air régnant dans le collecteur d'admission, sous les mêmes conditions, lors des essais. Le bloc 15 reçoit simultanément une valeur R_{PTm} du rapport pression / température de l'air mesuré dans le collecteur d'admission, élaborée par le bloc 12 sur la base des signaux T_{col} et P_{col} fournis par les capteurs 2 et 3. Le bloc 15 se comporte en régulateur classique, de type P.I.D. par exemple et foumit en sortie une correction de l'angle d'ouverture du papillon qui s'ajoute à la valeur nominale d'ouverture délivrée par le bloc 14 pour former la commande αP d'ouverture du papillon d'admission 9. On réalise ainsi un asservissement qui tend à corriger la valeur nominale d'ouverture du papillon déterminée dans les conditions expérimentales de la mise au point pour prendre en compte les variations du remplissage en air liées aux dispersions de perméabilité de l'ensemble d'admission entre les moteurs, aux différences entre conditions expérimentales et réelles ainsi qu'au vieillissement du système.

On va maintenant s'intéresser à la génération des autres paramètres de commande du moteur, qui s'effectue selon un second mode d'exploitation du procédé selon l'invention. On ne décrira que la détermination de la durée d'injection Ti en relation avec le fonctionnement du bloc 16. En effet, la détermination des autres paramètres s'effectue de manière strictement analogue, comme par exemple la commande de l'avance à l'allumage All au moyen du bloc 17 ou d'autres paramètres non cités, tels qu'une commande de contre-pression à l'échappement ou du débit d'huile de graissage dans le cas d'un moteur à deux temps, par d'autres blocs appropriés non représentés, qui pourraient être reliés en parallèle avec les blocs 16 et 17 ainsi que le montrent les pointillés sur la figure 2.

Comme on l'a vu précédemment, le calculateur 11 reçoit les signaux PP, N, T_{col} et P_{col} représentatifs respectivement du degré d'enfoncement de la pédale, du régime moteur, de la température et de la pression de l'air dans le collecteur d'admission. A partir de ces deux derniers signaux, le bloc 12 élabore le rapport pression / température mesuré R_{PTm} qui est transmis au bloc 13. Celui-ci reçoit en outre le régime N du moteur. Le bloc 13 opère alors une lecture "inverse" de la table des rapports pression / température qu'il contient et détermine à partir des signaux R_{PTm} et N un degré d'enfoncement virtuel PPV de la pédale d'accélérateur correspondant au degré d'enfoncement qui, lors de la mise au point du moteur, permettait d'obtenir un rapport pression/température égal à R_{PTm} au régime N mesuré. Naturellement, compte tenu des différences entre conditions réelles et expérimentales et des temps de réponse précédemment évoqués, le degré d'enfoncement virtuel PPV ainsi déterminé ne correspond pas nécessairement au degré d'enfoncement réel PP. Ainsi, par exemple lors d'une accélération brutale, le retard de remplissage en air lié à la capacité du collecteur d'admission entraîne un retard du degré d'enfoncement virtuel PPV par rapport au degré d'enfoncement mesuré PP. Le degré d'enfoncement virtuel PPV ainsi déterminé est transmis, conjointement avec le régime N au bloc 16 de définition de la durée d'injection Ti. Celui-ci comporte la table des valeurs optimales de la commande de durée d'injection dressée lors de la mise au point, et extrait la commande Ti en fonction du degré d'enfoncement virtuel PPV de la pédale et du régime N. On remarquera que l'on obtient ainsi une commande d'un paramètre de réglage du moteur qui suit au plus près l'évolution de son remplissage en air, ce qui permet un fonctionnement optimal du moteur lors des transitoires et donc une réduction de la pollution.

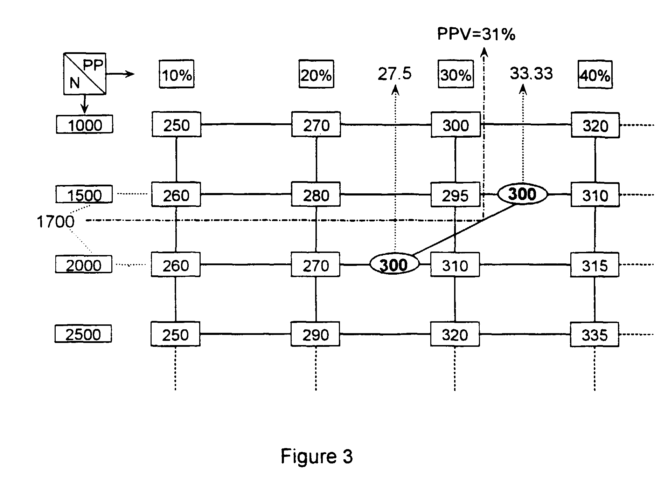

On va maintenant expliquer plus en détail le procédé de lecture "inverse" de la table du bloc 13 en relation avec le schéma de la figure 3 qui illustre ce procédé au moyen d'un exemple. La figure 3 montre un fragment de la table contenue dans le bloc 13, qui s'étend de 1000 à 2500 tours par minute en régime (colonnes) et de 10% à 40% du degré d'enfoncement maximal de la pédale d'accélérateur (lignes). Les valeurs du rapport pression / température figurant dans la table sont exprimées en Pascal par degré Kelvin. L'exemple illustré correspond au cas où, pour un régime N = 1700 tr/mn on a relevé une pression P_{col} = 90000 Pa et une température T_{col} = 300°K. Le bloc 12 foumit donc un rapport pression/température R_{PTm} = 300. On détermine tout d'abord les régimes tabulés immédiatement adjacents au régime réel mesuré de 1700 tr/mn, soit les lignes correspondant aux régimes de 1500 tr/mn et 2000 tr/mn. Dans chacune de ces lignes, on procède à la recherche de la valeur du degré d'enfoncement de la pédale correspondant au rapport pression/température mesuré R_{PTm} = 300 en opérant au besoin une interpolation entre deux valeurs encadrant ce rapport sur la ligne. Dans l'exemple, pour 1500 tr/mn, un rapport pression / température R_{PTm} = 300 correspond à un degré d'enfoncement virtuel de 33.33%. On opère de même pour 2000 tr/mn et on obtient un degré d'enfoncement virtuel de 27.5%. En interpolant entre ces valeurs, en fonction du régime réel N = 1700 tr/mn, on en tire une valeur de 31% pour le degré d'enfoncement virtuel PPV correspondant aux valeurs de l'exemple. On peut noter que ce procédé est valable si pour les régimes de la table considérés, l'évolution du rapport pression/température est monotone, ce qui est généralement le cas. Cependant, pour certains moteurs et/ou dans certaines plages de fonctionnement, le rapport peut être sensiblement constant ou non monotone en fonction du degré d'enfoncement ce qui peut conduire à une indétermination. Dans ce cas, on utilise la valeur du degré d'enfoncement réel pour lever cette indétermination. Par exemple, si pour un régime de la table, l'évolution n'est pas monotone, plusieurs valeurs du degré d'enfoncement virtuel peuvent correspondre à une valeur donnée du rapport pression / température. On prend alors le degré d'enfoncement virtuel le plus proche du degré d'enfoncement réel de la pédale. Si le rapport pression / température est sensiblement constant entre deux pas du degré d'enfoncement dans la table, une faible variation du rapport mesuré R_{PTm} peut conduire à de fortes variation dans la valeur de PPV ce qui a des conséquences défavorables sur la stabilité du réglage. On vérifie alors si le degré d'enfoncement réel de la pédale est compris entre ces deux pas. Dans l'affirmative, le degré d'enfoncement virtuel est pris égal au degré d'enfoncement réel, sinon il est pris égal à la valeur du pas de la table le plus proche du degré d'enfoncement réel.

Bien entendu, les deux modes d'exploitation du procédé que l'on a décrit ci-dessus ne sont pas mutuellement exclusifs. Ils peuvent être employés conjointement ou séparément pour la commande de moteurs à injection directe. De même, l'invention n'est pas limitée à la commande des paramètres décrits, de nombreux autres paramètres, dépendant du type et de la complexité du moteur commandé peuvent être ainsi traités, comme par exemple la commande de dégazage d'un filtre destiné à capturer les vapeurs de carburant, etc.

Le procédé selon l'invention peut également s'étendre à la combinaison avec des corrections connues en elles-mêmes, comme par exemple la correction des commandes délivrées (durée et phase d'injection, commande d'allumage,etc.), en fonction d'autres paramètres d'entrée tels que la température du liquide de refroidissement Te fournie par un capteur 6 ou la présence de cliquetis.

## Revendications

1. Procédé de commande d'un moteur à combustion inteme (1) à injection directe, du type utilisant une mesure du degré d'enfoncement (PP) d'une pédale d'accélérateur (4) et une mesure du régime (N) de rotation du moteur pour fournir des paramètres (Ti; φi; All; αP) de réglage optimal dudit moteur, caractérisé en ce que :
• on établit, lors de la mise au point du moteur, une table représentant pour chaque couple degré d'enfoncement (PP), régime (N), le rapport pression/température (R_{PT0}) de l'air régnant dans le collecteur d'admission en fonctionnement stabilisé,
• on mesure, en fonctionnement normal, la pression (P_{col}) et la température (T_{col}) de l'air admis, et on forme le rapport pression / température mesurés (R_{PTm})
• on utilise la table et une au moins des mesures effectuées pour en déduire au moins un des paramètres de réglage optimal du moteur.

2. Procédé selon la revendication 1, caractérisé en ce que:
• on détermine dans la table, à partir du régime (N) et du degré d'enfoncement (PP) mesurés une valeur de consigne (R_{PTc}) du rapport pression/température de l'air admis, et
• on agit sur l'angle d'ouverture (αP) d'un papillon des gaz (9) placé dans le collecteur d'admission pour asservir le rapport pression / température mesuré (R_{PTm}) à cette valeur de consigne.

3. Procédé selon la revendication 1, caractérisé en ce que:
• on détermine par lecture inverse de la table, à partir du régime (N) et du rapport pression/température (R_{PTm}) mesurés un degré d'enfoncement virtuel (PPV) de la pédale d'accélérateur, et
• on utilise ce degré d'enfoncement virtuel (PPV) de la pédale pour foumir au moins un des paramètres de réglage optimal du moteur.

4. Procédé selon la revendication 3, caractérisé en ce que la lecture du degré d'enfoncement virtuel (PPV) de la pédale dans la table s'effectue en déterminant pour les régimes tabulés immédiatement adjacents au régime réel (N), la valeur du degré d'enfoncement de la pédale correspondant au rapport pression / température mesuré, et en interpolant entre ces valeurs en fonction du régime réel.

5. Procédé selon la revendication 4, caractérisé en ce que, lorsque plusieurs degrés d'enfoncement virtuel (PPV) correspondent au rapport pression / température mesuré, seul le degré d'enfoncement virtuel le plus proche du degré d'enfoncement réel de la pédale est pris en considération.

6. Procédé selon la revendication 4, caractérisé en ce que, lorsque pour un régime tabulé immédiatement adjacent au régime réel (N), la variation du rapport pression/température enregistré dans la table (R_{PT0}) sur un intervalle entre deux valeurs du degré d'enfoncement de la pédale (PP) encadrant la valeur du rapport mesuré (R_{PTm}) est inférieure à un seuil prédéterminé, le degré d'enfoncement virtuel (PPV) est déterminé en choisissant le degré d'enfoncement réel si celui-ci est compris entre les deux valeurs du degré d'enfoncement limitant l'intervalle ou la valeur limite la plus proche dans le cas contraire.

## Patentansprüche

1. Verfahren zum Steuern einer Brennkraftmaschine (1) mit Direkteinspritzung unter Verwendung einer Messung des Verstellgrades (PP) eines Beschleunigerpedals (4) und einer Messung der Drehzahl (N) der Brennkraftmaschine zum Erzeugen von Parametern (Ti; Φi; All; αP) zur optimalen Regelung der Brennkraftmaschine, dadurch gekennzeichnet, daß:
- man beim Einstellen der Brennkraftmaschine eine Tabelle erstellt, die für jedes Paar aus Verstellgrad (PP) und Drehzahl (N) das Verhältnis Druck/Temperatur (R_{PTO}) der Luft in dem Saugrohr bei stationärem Betrieb darstellt,
- man bei normalem Betrieb den Druck (Pcol) und die Temperatur (Tcol) der eingelassenen Luft mißt und das Verhältnis gemessener Druck/gemessene Temperatur (R_{PTm}) bildet,
- man die Tabelle und mindestens eine der durchgeführten Messungen dazu verwendet, hieraus mindestens einen der Parameter zur optimalen Regelung der Brennkraftmaschine abzuleiten.

2. Verfahren nach Anspruch 1, dadurch gekennzeichnet, daß:
- man in der Tabelle ausgehend von der gemessenen Drehzahl (N) und dem gemessenen Verstellgrad (PP) einen Sollwert (R_{PTc}) des Verhältnisses Druck/Temperatur der eingelassenen Luft bestimmt und
- man auf den Öffnungswinkel (αP) einer im Saugrohr angeordneten Drosselklappe (9) einwirkt, um das Verhältnis gemessener Druck/gemessene Temperatur (R_{PTm}) auf diesen Sollwert einzuregeln.

3. Verfahren nach Anspruch 1, dadurch gekennzeichnet, daß:
- man durch inverses Lesen der Tabelle ausgehend von der Drehzahl (N) und dem Verhältnis gemessener Druck/gemessene Temperatur (R_{PTm}) einen gedachten Verstellgrad (PPV) des Beschleunigerpedals bestimmt und
- man diesen gedachten Verstellgrad (PPV) des Pedals dazu verwendet, mindestens einen der Paramter zur optimalen Regelung der Brennkraftmaschine zu gewinnen.

4. Verfahren nach Anspruch 3, dadurch gekennzeichnet, daß das Lesen des gedachten Verstellgrades (PPV) des Pedals in der Tabelle in der Weise erfolgt, daß für die tabellierten Drehzahlen unmittelbar benachbart zu der Ist-Drehzahl (N) der Wert des Verstellgrades des Pedals entsprechend dem Verhältnis gemessener Druck/gemessene Temperatur bestimmt und zwischen diesen Werten in Abhängigkeit von der Ist-Drehzahl interpoliert wird.

5. Verfahren nach Anspruch 4, dadurch gekennzeichnet, daß, falls mehrere gedachte Verstellgrade (PPV) dem Verhältnis gemessener Druck/gemessene Temperatur entsprechen, allein derjenige gedachte Verstellgrad, der dem Ist-Verstellgrad des Pedals am nächsten kommt, in Betracht gezogen wird.

6. Verfahren nach Anspruch 4, dadurch gekennzeichnet, daß, falls für eine tabellierte Drehzahl unmittelbar benachbart zu der Ist-Drehzahl (N) die Änderung des in der Tabelle eingetragenen Verhältnisses Druck/Temperatur (R_{PTO}) in einem Intervall zwischen zwei Werten des Verstellgrades (PP) des Pedals, die den Wert des gemessenen Verhältnisses (R_{PTm}) einrahmen, kleiner ist als eine vorgegebene Schwelle, der gedachte Verstellgrad (PPV) in der Weise bestimmt wird, daß der Ist-Verstellgrad, wenn dieser zwischen den beiden das Intervall begrenzenden Werten des Verstellgrades liegt, oder der nächste Grenzwert im entgegengesetzten Fall gewählt wird.

## Claims

1. Method for controlling a direct injection internal-combustion engine (1), of the type employing a measurement of the degree of depression (PP) of an accelerator pedal (4) and a measurement of the speed (N) of rotation of the engine to provide parameters (Ti; φi; All; αP) for optimum adjustment of said engine, characterised in that:
• when designing the engine, a table is compiled to represent, for each pair consisting of degree of depression (PP) and speed (N), the pressure/temperature ratio (R_{PTO}) of the air prevailing in the inlet manifold during steady operation,
• the pressure (P_{col}) and the temperature (T_{col}) of the air admitted is measured during normal operation and the measured pressure/temperature ratio (R_{PTm}) is formed
• the table and at least one of the measurements taken are used to deduce at least one of the parameters for optimum adjustment of the engine.

2. Method according to claim 1, characterised in that:
• a reference value (R_{PTc}) of the pressure/temperature ratio of the air admitted is determined from the table, on the basis of the measured speed (N) and degree of depression (PP), and
• the opening angle (αP) of a throttle valve (9) placed in the inlet manifold is adjusted so the measured pressure/temperature ratio (R_{PTm}) is controlled by this reference value.

3. Method according to claim 1, characterised in that:
• a degree of virtual depression (PPV) of the accelerator pedal is determined by reverse reading of the table, on the basis of the measured speed (N) and pressure/temperature ratio (R_{PTm}), and
• this degree of virtual depression (PPV) of the pedal is used to provide at least one of the parameters for optimum adjustment of the engine.

4. Method according to claim 3, characterised in that the degree of virtual depression (PPV) of the pedal is read from the table by determining, for the tabulated speeds immediately adjacent to the actual speed (N), the value of the degree of depression of the pedal corresponding to the measured pressure/temperature ratio and by interpolating between these values as a function of the actual speed.

5. Method according to claim 4, characterised in that, when a plurality of degrees of virtual depression (PPV) correspond to the measured pressure/temperature ratio, only the degree of virtual depression closest to the degree of actual depression of the pedal is taken into consideration.

6. Method according to claim 4, characterised in that when, for a tabulated speed immediately adjacent to the actual speed (N), the variation in the pressure/temperature ratio recorded in the table (R_{PTO}) over a range between two values of the degree of depression of the pedal framing the value of the measured ratio (R_{PTm}) is lower than a predetermined threshold, the degree of virtual depression (PPV) is determined by selecting the degree of actual depression if it is comprised between the two values of the degree of depression limiting the range or the closest limit value in the opposite case.
